# NEUE EUROPÄISCHE PATENTSCHRIFT

(11) **EP 0 552 438 B2**
(45) Veröffentlichungstag und Bekanntmachung des Hinweises auf die Entscheidung über den Einspruch: **03.12.1997**
(45) Hinweis auf die Patenterteilung: 18.01.1995
(21) Anmeldenummer: 92119666.3
(22) Anmeldetag: 19.11.1992
(51) Int. Cl.: B60G 21/055, B60G 15/06

(54) **Schwingungsdämpfer**
Shock absorber
Amortisseur

(30) Priorität: 24.01.1992 DE 4201837
(43) Veröffentlichungstag der Anmeldung: 28.07.1993
(73) Patentinhaber: Dr.Ing.h.c. F. Porsche Aktiengesellschaft, 70435 Stuttgart (DE)
(72) Erfinder: Wöhler, Hans-Jürgen, W-7000 Stuttgart 80 (DE); Mevissen, Peter, W-7252 Weil der Stadt 2 (DE)

(56) Entgegenhaltungen:
- EP-A- 0 279 135
- EP-A- 0 312 711
- EP-A- 0 370 217
- DE-A- 3 514 360
- DE-U- 7 922 930
- DE-U- 8 802 370
- FR-A- 2 472 487
- REIMPELL, J. 'Fahrwerktechnik : Grundlagen' 1988 , VOGEL , WüRZBURG, DE

## Beschreibung

Die Erfindung bezieht sich auf einen Schwingungsdämpfer nach dem Oberbegriff des Anspruchs 1.

Aus der DE 37 01 265 C2 ist ein Schwingungsdämpfer bekannt, bei dem am Federbein über eine verbundene Konsole ein Gehänge eines Stabilisators angelenkt ist. Ein oberhalb der Konsole angeordnetes Federelement ist mittels eines separat am Zylinder des Federbeines befestigten Federtellers mit seinem unteren Ende zum Bein hin abgestützt, wobei das abgekehrte Ende am Fahrzeug über ein elastisches Lager gehalten wird.

Aus dem gattungsbildenden Dokument, Reimpell, J., Fahrwerktechnik: Grundlagen, Edition 2, Würzburg, DE 1988, Seite 75, Bild 1.53, ist ein Schwingungsdämpfer für ein Rad eines Kraftfahrzeuges mit einer am Federbein gehaltenen Lagereinheit für die Lagerung eines Gehänges eines Stabilisators und zur Abstützung einer Spiralfeder bekannt. Diese Lagereinheit umfaßt ein den Zylinder des Federbeines umgreifendes Halteelement mit einem ersten Hülsenring zur Abstützung der Spiralfeder und einen zweiten Hülsenring, der am Zylinder befestigt ist und der mit einer separaten Konsole über eine Schweißung verbunden ist. In dieser Konsole ist die Lagerung für das Gehänge angeordnet.

Aufgabe der Erfindung ist es, einen Schwingungsdämpfer zu schaffen, mit dem eine baulich vereinfachte Lagerung für das Gehänge und die Spiralfeder gewährleistet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Lagerung für das Gehänge und für die Spiralfeder am Federbein durch ein Bauteil zusammengefaßt ist. Hierdurch wird gegenüber dem Stand der Technik ein Bauteil eingespart und eine gesonderte Befestigung für den nunmehr nicht mehr vorhandenen Federteller entfällt. Hierdurch wird eine Gewichtseinsparung erzielt.

Die Lagereinheit am Federbein besteht im wesentlichen aus einem das Federbein umgreifenden Halteelement, umfassend ein Hülsenteil mit einer angeformten Konsole für ein Lager des Gehänges. Am Hülsenteil ist oberseitig ein Federteller für die Spiralfeder ausgebildet.

Durch diese Anordnung des integrierten Federtellers kann bei einem Bruch der Feder diese nicht, wie nach dem Stand der Technik, abrutschen.
In der durch den Federteller gebildeten Abstützfläche ist ein Endanschlag für das Ende der letzten Windung der Spiralfeder vorgesehen, welcher aus einer Zunge besteht, die aus dem Material der Abstützfläche herausgedrückt ist.

Das Hülsenteil besteht aus zwei beabstandeten Hülsenringen, die zwischen sich eine axiale Aussparung aufweisen. Beide Hülsenringe bilden ein Bauteil. Die Ringe sind zur Festsetzung an den Zylinder festgeschweißt.

Ausführungsbeispiele der Erfindung sind in der Zeichnung dargestellt und werden im folgenden näher beschrieben:

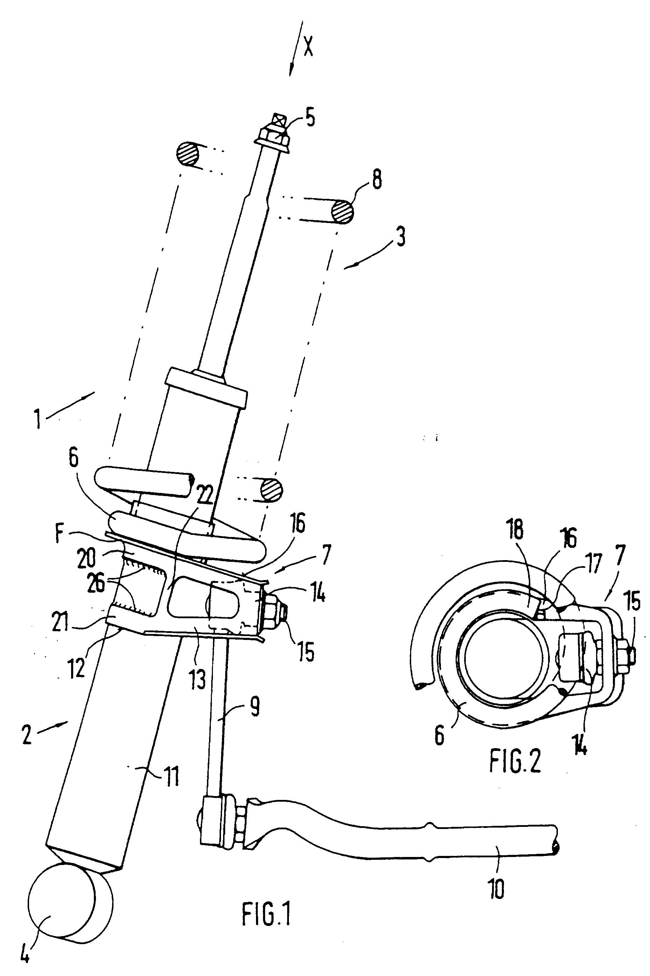

Es zeigen
- Fig. 1: eine Ansicht eines Schwingungsdämpfers mit Lagereinheit für das Gehänge und eine Spiralfeder,
- Fig. 2: eine Ansicht in Pfeilrichtung X auf die Lagereinheit gesehen,

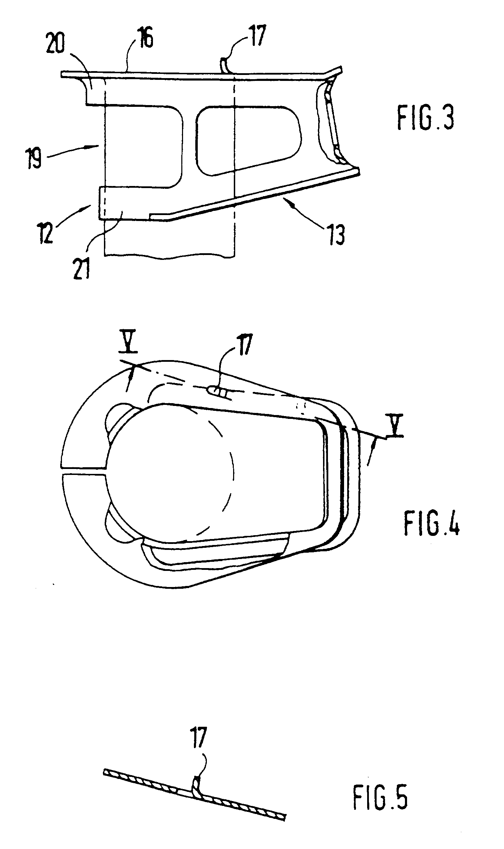

- Fig. 3: die Lagereinheit in einer Vorderansicht,
- Fig. 4: die Lagereinheit in einer Draufsicht und
- Fig. 5: einen Schnitt durch einen Anschlag der Linie V-V der Fig. 4.

Ein Schwingungsdämpfer 1 umfaßt ein Federbein 2 sowie eine Spiralfeder 3. Das Federbein 2 ist beispielsweise mit seinem unteren Ende 4 an einem Radführungsglied bzw. an einem Radträger (nicht gezeigt) abgestützt und mit seinem oberen Ende 5 am Fahrzeugbau. Die Spiralfeder 3 stützt sich mit ihrem unteren Ende bzw. mit der letzten Windung 6 an einer Lagereinheit 7 und mit ihrem abgekehrten oberen Ende 8 am Fahrzeugaufbau ab. Mit der Lagereinheit 7 ist ein Gehänge 9 eines Stabilisators 10 verbunden.

Die Lagereinheit 7 besteht aus einem den Zylinder 11 des Federbeines 2 umgreifenden Halteelement 22. Dies weist ein Hülsenteil 12 auf, an das sich eine angeformte Konsole 13 anschließt, die vom Zylinder 11 abragt und endseitig ein Lager 14 mit Befestigung 15 für ein Ende des Gehänges 9 besitzt.

Eine vom Hülsenteil 12 und der Konsole 13 gebildete ebene Stirnfläche 16 bildet einen Federteller F für die Spiralfeder 3, welche sich mit ihrer letzten Windung 6 an diesem abstützt. In der Fläche 16 ist ein Endanschlag 17 vorgesehen, der das freie Ende 18 der letzten Windung 6 in einer positionierten Lage hält.

Das Hülsenteil 12 weist durch eine axiale Aussparung 19 beabstandete Hülsenringe 20 und 21 auf, die an die Konsole 13 festigkeitsmäßig angebunden sind. Diese Hülsenringe 20 und 21 sind mit dem Zylinder 11 des Federbeines 2 durch eine Schweißung 26 fest verbunden.

## Patentansprüche

1. Schwingungsdämpfer für ein Rad eines Kraftfahrzeuges, mit einer am Zylinder des Schwingungsdämpfers gehaltenen Lagereinheit für ein Gehänge eines Stabilisators, wobei die Lagereinheit ein den Zylinder des Schwingungsdämpfers umgreifendes und mit diesem verbundenes Halteelement umfaßt, das einerseits in einer vorragenden Konsole ein Lager für das Gehänge aufweist und das andererseits an einer Stirnfläche einen Federteller für eine koaxial zum Schwingungsdämpfer angeordnete Spiralfeder bildet, die mit ihrem dem Lager abgekehrten Ende am Fahrzeug abgestützt ist, wobei das aus einem Hülsenteil und einer Konsole gebildete Halteelement einen Federteller mit einer Abstützfläche bildet, die einen Endanschlag (17) für eine letzte Windung (16)der Spiralfeder (3) aufweist und im Hülsenteil in der abzweigenden Konsole ein Ende des Gehänges im Lager befestigt ist, **dadurch gekennzeichnet,** daß das Hülsenteil (12) des Halteelements (22) den Zylinder (11) annähernd zur Hälfte umschließt und mit der Konsole (13) durch wegführende Arme verbunden ist, wobei das Halteelement (22) einen Hohlraum zwischen dem Zylinder (11), der Konsole (13) und den Armen aufweist, in dem das Lager (14) angeordnet ist, wobei das Halteelement aus einem einzigen Bauteil besteht.

2. Schwingungsdämpfer nach Anspruch 1. **dadurch gekennzeichnet,** daß das Hülsenteil (12) eine axiale Aussparung (19) aufweist und durch zwei beabstandete Hülsenringe (20, 21), die an die Konsole (13) angebunden sind, gebildet wird.

3. Schwingungsdämpfer nach Anspruch 2, **dadurch gekennzeichnet,** daß die Hülsenringe (20, 21) jeweils durch eine Schweißung (26) am Zylinder (11) des Federbeines (2) verbunden sind.

## Claims

1. A vibration damper for a wheel of a motor vehicle with a bearing unit held on the cylinder of the vibration damper for a depending attachment of a stabilizer, wherein the bearing unit comprises a retaining member engaging around the cylinder of the vibration damper and connected thereto, the retaining member on the one hand comprising a bearing for the depending attachment in a projecting bracket and on the other hand forming a spring plate on an end face for a helical spring arranged coaxially with the vibration damper and supported on the vehicle by the end thereof remote from the bearing, wherein the retaining member formed by a sleeve part and a bracket forms a spring plate with a support face having an end stop (17) for a last coil (16 [*sic - recte* 6]) of the helical spring (3), and in the sleeve part in the branching bracket one end of the depending attachment is secured in the bearing, **characterized in that** the sleeve part (12) of the retaining member (22) surrounds substantially half of the cylinder (11) and is connected to the bracket (13) by extending arms, wherein the retaining member (22) is provided with a cavity between the cylinder (11), the bracket (13) and the arms in which the bearing (14) is arranged, and wherein the retaining member comprises a single component.

2. A vibration damper according to Claim 1, **characterized in that** the sleeve part (12) has an axial recess (19) and is formed by two spaced sleeve rings (20, 21) attached to the bracket (13).

3. A vibration damper according to Claim 2, **characterized in that** the sleeve rings (20, 21) are each connected to the cylinder (11) of the shock-absorbing leg (2) by a welded join (26).

## Revendications

1. Amortisseur d'oscillations pour une roue d'un véhicule automobile comportant une unité d'appui, maintenue sur le cylindre de l'amortisseur, pour la suspension d'un stabilisateur, l'unité d'appui comprenant un élément de maintien entourant le cylindre de l'amortisseur et relié avec celui-ci qui d'une part comporte, dans une console saillante, un palier pour la suspension et qui d'autre part forme, sur une surface frontale, une cuvette de ressort pour un ressort hélicoïdal, coaxial à l'amortisseur, lequel ressort est soutenu sur le véhicule, avec son extrémité tournée à l'opposé du palier, l'élément de maintien, formé par une douille et une console, forment une cuvette de ressort avec une surface d'appui qui présente une butée terminale (17) pour une dernière spire (16) du ressort hélicoïdal (3) et une extrémité de la suspension étant fixée dans le palier en ce que dans la douille (12 ; 13), dans la console dérivée, caractérisée par le fait que la douille (12) de l'élément de maintien (22) entoure à peu près la moitié du cylindre (11) et est reliée à la console (13) par des bras qui s'éloignent, l'élément de maintien (22) présentant un espace vide, entre le cylindre (11), la console (13) et les bras, dans lequel est disposé le palier (14), est l'élément de maintien étant constitué en une seule pièce.

2. Amortisseur d'oscillations selon la revendication 1, caractérisé en ce que la douille (12) présente une découpe (19) axiale et est formée par deux anneaux de douille (20, 21) écartés, qui sont rattachés à la console (13).

3. Amortisseur d'oscillations selon la revendication 2, caractérisé en ce que les anneaux de douille (20, 21) sont assemblés chacun par une soudure (26) au cylindre (11) de la jambe de force à ressort (2).
